# FASCICULE DE BREVET EUROPEEN

(11) **EP 4 601 922 B1**
(45) Date de publication et mention de la délivrance du brevet: **23.09.2026**
(21) Numéro de dépôt: 23772914.0
(22) Date de dépôt: 30.08.2023
(51) Int. Cl.: B60W 50/00, B60W 50/14, B60W 60/00

(54) **PROCÉDÉ ET DISPOSITIF DE MISE EN PAUSE D'UN SYSTÈME D'AIDE À LA CONDUITE D'UN VÉHICULE AUTONOME**
VERFAHREN UND VORRICHTUNG ZUR UNTERBRECHUNG EINES FAHRERASSISTENZSYSTEMS EINES AUTONOMEN FAHRZEUGS
METHOD AND DEVICE FOR PAUSING A DRIVER-ASSISTANCE SYSTEM OF AN AUTONOMOUS VEHICLE

(30) Priorité: 12.10.2022 FR 2210478
(43) Date de publication de la demande: 20.08.2025
(73) Titulaire: Stellantis Auto SAS, 78300 Poissy (FR)
(72) Inventeur: DUSI, Jacques, 77220 GRETZ ARMAINVILLIERS (FR); ASTIER, Marie, 78960 VOISINS LE BRETONNEUX (FR)
(74) Mandataire: ESIP
(86) Numéro de dépôt international: PCT/FR2023/051314
(87) Numéro de publication internationale: WO 2024/079396

(56) Documents cités:
- EP-A1- 3 971 048
- DE-A1- 102015 206 969
- DE-A1- 102017 208 506

## Description

### Domaine technique de l'invention

L'invention est dans le domaine des systèmes d'aide à la conduite de véhicule autonome. En particulier, l'invention concerne un procédé et dispositif de mise en pause d'un premier système d'aide à la conduite d'un véhicule autonome en présence d'un conducteur.

### Etat de la technique

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les procédés aptes à assister la conduite du véhicule sont aussi nommés ADAS (de l'acronyme anglais « Advanced Driver Assistance Systems »), systèmes ADAS ou systèmes d'aide à la conduite. Parmi ces systèmes ADAS, sont connus un système d'anti-patinage des roues, souvent nommé ASR de l'acronyme anglais « Anti-Slip Regulation », un système d'anti-patinage des roues, souvent nommé ESP de l'acronyme anglais « Electric Stability Program », un régulateur de vitesse adaptatif, souvent nommé ACC de l'acronyme anglais « Auto Cruise Control », un système d'aide au maintien de la position du véhicule dans une voie de circulation, souvent nommé LPA de l'acronyme anglais « Lane Positionning Assit », un système de changement de voie, souvent nommé SALC de l'acronyme anglais « Semi Automatic Lane Change », un système d'adaptation d'une consigne de vitesse utilisée par l'ACC, souvent nommé ISA ou A-ISA de l'acronyme anglais « Anticipated Intelligent Speed Assist », d'un système de réduction de la vitesse du véhicule dans les courbes, souvent nommé CSA de l'acronyme anglais « Curve Speed Assist », des aides au stationnement ... . Par exemple, EP 3 971 048 A1 décrit de tels systèmes.

Chacun de ces systèmes peut être dans un état :
- désactivé, la fonction n'agit pas sur le véhicule, c'est comme si la fonction est éteinte ou est absente du véhicule :
- en pause, la fonction n'agit pas sur le véhicule, mais la fonction surveille des conditions de fonctionnement ou de dysfonctionnement, et/ou la réception d'un signal représentatif d'une demande d'activation. La fonction pourra garder en mémoire une valeur de consigne définie précédemment par le conducteur. Pour passer le système à l'état actif, le conducteur devra faire une demande d'activation à l'aide d'une Interface Homme Machine, IHM, comme par exemple un appui sur une commande du véhicule (enfoncement ou position d'un bouton, d'une pédale, d'un comodo, appui sur une zone d'un écran tactile, ...).
- activé, la fonction est active et elle apte, en fonction de conditions de fonctionnement, à passer à l'état déclenchée, ou à émettre des messages vers une IHM et à interpréter des messages reçue d'une IHM ;
- déclenché, la fonction va agir sur des organes (moteur, roue, direction, Interface Homme Machine - IHM - ...) du véhicule et peut changer le comportement dynamique du véhicule (principalement sur la vitesse d'avancement du véhicule et/ou sur la position latérale par rapport à une voie sur laquelle le véhicule circule).

Les conditions de fonctionnement dépendent du système ADAS. Les conditions de fonctionnement sont déterminées par des capteurs du système ADAS et/ou par un traitement de données reçues par le système ADAS. Les conditions de fonctionnement dépendent, par exemple, de conditions météorologiques, de caractéristiques d'une chaussée, d'une route ou d'une voie de circulation sur laquelle le véhicule circule (type de chaussée comme autoroute, voie rapide, ..., route multi voies, voie à sens unique, ...), de détection d'objets (piéton, cycliste, véhicule, ...) sur une chaussée ou en bord de chaussée, de caractéristiques des objets détectées (véhicule large ou étroit, véhicule long ou court, position, vitesse et sens de circulation, ...). Les conditions de fonctionnement peuvent également inclure des actions d'un occupant du véhicule sur une IHM liée au véhicule. Par exemple, pour un système SALC, une fois activé, le système ne sera déclenché que si le conducteur active le clignotant pour spécifier un côté vers lequel il demande au système de changer de voie. Bien entendu, d'autres conditions seront nécessaires (absence de détection d'un véhicule sur la voie vers laquelle le conducteur souhaite aller, ...) avant le déclenchement du système SALC.

Pour que la fonction soit déclenchée, il faut que des conditions de fonctionnement soit vérifiées. On entend par « condition de fonctionnement vérifié » une règle (comparaison, égalité) qui est vraie. Par exemple, une condition de fonctionnement est :
- une caractéristique d'une chaussée est de type autoroute ;
- une vitesse du véhicule est supérieure ou égale à 70 km/h (d'autres valeurs sont possibles) ;
- La vitesse légale courant de la chaussée est supérieure ou égale à 50 km/h (d'autres valeurs sont possibles).

Afin d'informer le conducteur dans quel état se trouve un système ADAS, une IHM spécifique est présentée aux occupants du véhicule. Pour des systèmes une fois activés nécessitant un déclenchement de la part du conducteur, un autre message d'information est présenté. Le message d'information peut être un pictogramme avec des couleurs différentes selon l'état, un message lexical affiché sur un écran, un message audio ou un son, ...

A travers d'interfaces Homme Machines (IHM, dispositif apte à une personne d'interagir avec un bouton, un écran tactile, une pédale, un volant, ...), un occupant du véhicule peut émettre un signal représentatif d'une demande d'activation, de désactivation ou de mise en pause d'un ou de plusieurs systèmes ADAS. Un système ADAS en pause ou activé va surveiller des conditions de fonctionnement, et suivant ces conditions peut désactiver ou mettre en pause la fonction.

Certains systèmes sont activés dès un démarrage du moteur du véhicule. Certains autres systèmes vont être mis en pause directement après réception d'un signal représentatif d'une première demande d'activation par un conducteur, dit première demande d'activation. Certains autres systèmes vont être activés directement après une première demande d'activation par le conducteur. Ces systèmes sont appelés systèmes à simple demande. Et d'autres systèmes, après réception d'une première demande d'activation, vont, une fois que les conditions de fonctionnement du système sont réunies, demander et attendre un signal représentatif d'une deuxième demande d'activation par le conducteur. Réglementairement, certaines systèmes ADAS doivent avoir une double demande d'activation avant d'être activés, par exemple c'est le cas pour les systèmes qui déplacent le véhicule pour changer de voie, comme le SALC, certaines aides au stationnement, ... Cette deuxième demande d'activation par le conducteur est également dite acquittement de la demande d'activation. Ainsi, certains systèmes ADAS ne peuvent être activés qu'après réception d'une première demande d'activation puis d'un acquittement. Ces systèmes sont appelés systèmes à double demandes.

Afin de minimiser le nombre de demandes d'activation de système ADAS par le conducteur, des systèmes ADAS sont regroupés dans un système ADAS global. On entend par système ADAS global, un système ADAS qui comprend plusieurs systèmes ADAS, dits sous-systèmes ADAS, possédant un ensemble de conditions de fonctionnement communs. Une demande d'activation du système ADAS global par le conducteur va entrainer une demande d'activation, sans action supplémentaire par le conducteur, des sous-systèmes ADAS.
Ainsi, si tous les sous-systèmes ADAS sont au moins actif, le systèmes ADAS global est actif. En revanche, dès qu'un sous-système ADAS n'est plus dans un état actif ou déclenché, le système ADAS global n'est plus actif, il entre dans un état en pause (en attente d'une nouvelle demande d'activation) et les autres sous-systèmes entrent également dans un état en pause.

Les (sous-)systèmes ADAS étant différents, les conditions de fonctionnement sont nombreuses. Certaines conditions de fonctionnement sont identiques entre sous-systèmes ADAS. D'autres ne le sont pas. Il existe alors de nombreuses conditions pour lequel le système ADAS n'est plus actif entrainant que les autres systèmes ADAS ne sont plus actifs. Le conducteur doit alors refaire une demande d'activation. Si le système ADAS global comprend au moins un système ADAS à double validation, le conducteur devra aussi acquitter chaque demande de validation.

### Résumé de l'invention

Un objet de la présente invention est de remédier au problème précité, en particulier réduire les demandes de validation à un conducteur et de réduire les acquittements nécessaires.

A cet effet, un premier aspect de l'invention concerne un procédé de mise en pause d'un premier système d'aide à la conduite d'un véhicule autonome en présence d'un conducteur, dit système global, ledit système global comprenant un deuxième et au moins un troisième système d'aide à la conduite, dits respectivement deuxième système et troisième système, ledit système global étant dans un état actif qu'après réception d'une demande d'activation par le conducteur et que si les deuxième système et troisième système sont actifs, la demande d'activation rendant ledit troisième système dans un état actif, le deuxième système envoyant une demande de validation lorsque le deuxième système reçoit la demande d'activation, le deuxième système devenant actif qu'après réception d'un acquittement, par le conducteur, de la demande de validation, le procédé comportant les étapes de :
- Activation dudit système global, dudit deuxième et dudit troisième système, et initialisation d'une variable, dite variable d'état, pour indiquer que ledit deuxième système est au moins actif ;
- Détermination d'une première et d'une deuxième condition de fonctionnement par ledit deuxième système, si ladite première et ladite deuxième conditions de fonctionnement sont vérifiées, déclenchement dudit deuxième système ;
- Si ladite première condition de fonctionnement n'est pas vérifiée, ledit deuxième système et ledit troisième système passent dans un état en pause et ladite variable indique un état non actif dudit deuxième système ;
- Si la deuxième condition de fonctionnement n'est pas vérifiée, ledit deuxième système reste dans son état précédemment déterminé ;
- Si la variable d'état indique un état non actif, ledit système global passe dans un état en pause.

Ainsi, l'état du deuxième système est surveillé grâce à la variable. Le système global ne passe pas dans un état en pause que si ladite première condition de fonctionnement n'est pas vérifiée. Si seule la deuxième condition de fonctionnement n'est pas vérifiée, le système global reste dans un état au moins actif. Le nombre de demandes de validation est significativement réduit rendant ainsi la conduite d'un véhicule autonome plus agréable et avec moins d'interaction pour un conducteur dudit véhicule.

Selon l'invention, le procédé comporte en outre une étape de détermination de ladite première et d'une troisième conditions de fonctionnement par ledit troisième système, si ladite première et ladite troisième conditions de fonctionnement sont vérifiées, déclenchement dudit troisième système.

Ainsi, les fonctionnalités du troisième système restent disponibles même si le deuxième système est dans un état en pause. Le système global ne met pas en pause le troisième système si seule la deuxième condition de fonctionnement n'est pas vérifiée.

Avantageusement, ledit véhicule comprend un dispositif apte à informer un occupant dudit véhicule, et dans le quel
- Si ladite première et ladite deuxième conditions de fonctionnement sont vérifiées, ledit deuxième système détermine et émet un premier message d'information ;
- Si ladite deuxième condition de déclenchement n'est pas vérifiée, ledit deuxième système détermine et émet un deuxième message d'information ;
- Si ladite première condition de déclenchement n'est pas vérifiée, ledit deuxième système détermine et émet un troisième message d'information ;
ledit dispositif réceptionne lesdits premier, deuxième et troisième messages et informe ledit occupant.

Ainsi, le conducteur est informé de l'état du deuxième système. Cette information est moins intrusive qu'une demande à nouveau d'activation puis d'acquittement. Des demandes d'activations et d'acquittements trop nombreux. En particulier, le conducteur ne va pas comprendre pourquoi il doit à nouveau acquitter une demande de validation alors que le deuxième système a été mis en pause à la suite d'une condition de fonctionnement non vérifiée, ici la troisième, qui ne concerne pas le deuxième système. Ces demandes d'activations et d'acquittements nombreux vont laissent à penser au conducteur qu'une défaillance du deuxième système existe. Le conducteur va alors aller perdre du temps pour aller faire réparer en garage un système ADAS opérationnel.

Avantageusement, ledit deuxième système est un système de changement de voie, et ledit troisième système est un système de réduction de la vitesse du véhicule dans les courbes, ladite première condition de fonctionnement est basée sur au moins une caractéristique d'une chaussée sur laquelle ledit véhicule circule.

Selon l'invention, ladite deuxième condition de fonctionnement est basée sur une vitesse dudit véhicule supérieure à une première valeur prédéterminée, et ladite troisième condition de fonctionnement est basée sur une vitesse dudit véhicule supérieure à une deuxième valeur prédéterminée, ladite deuxième valeur prédéterminée étant différente de la dite première valeur prédéterminée.

Dans le cas où le deuxième système est un SALC et le troisième système est un CSA et/ou un AISA, par exemple, ladite première condition de fonctionnement va vérifier que le véhicule circule sur une autoroute, ladite deuxième condition de fonctionnement va vérifier que la vitesse du véhicule est supérieure à 70 km/h, et la dite troisième condition de fonctionnement va vérifier que la vitesse du véhicule est supérieure à 50 km/h.

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions qui, lorsque le programme est exécuté par le dispositif selon le deuxième aspect de l'invention, conduisent celui-ci à mettre en œuvre le procédé selon le premier aspect de l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de mise en pause d'un premier système d'aide à la conduite d'un véhicule autonome, selon un exemple particulier de réalisation de la présente invention.

### Description détaillée de l'invention

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

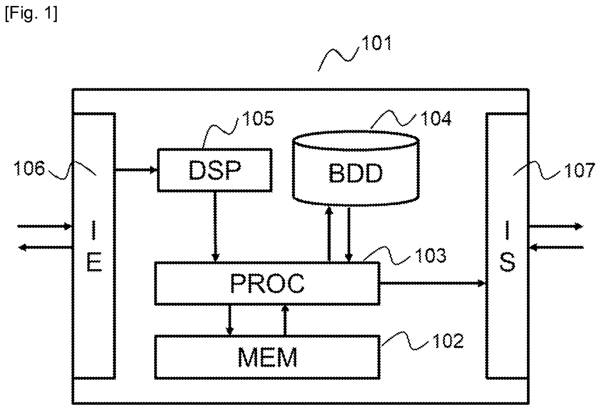

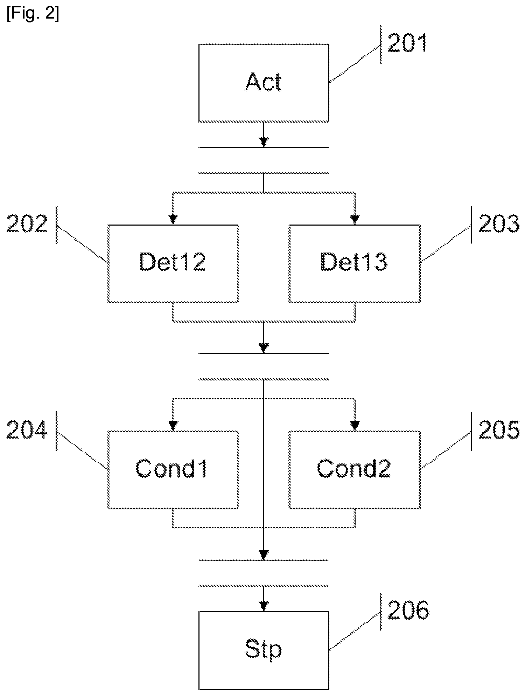

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

Par exemple, l'interface d'entrée 106 peut réceptionner les données suivantes : position ou localisation géographique du véhicule, vitesse et/ou accélération du véhicule, positions/vitesses/accélérations consignes ou prédéterminées, régime moteur, position et/ou course de la pédale d'embrayage, de frein et/ou d'accélération, détection d'autres véhicules ou objets, position ou localisation géographique des autres véhicules ou objets détectés, vitesse et/ou accélération des autres véhicules ou objets détectés, états de fonctionnement de capteurs, indice de confiance de données issues ou traitées par des capteurs et/ou dispositifs similaires au dispositif 101. Par exemple, les capteurs aptes à fournir des données sont : GPS associé ou non à une cartographie, tachymètres, accéléromètres, RADAR, LIDAR, lasers, ultra-sons, caméra ... Par exemple, l'interface d'entrée 106 peut réceptionner des données permettant à un système ADAS de déterminer des conditions de fonctionnement

Par exemple, l'interface de sortie 107 peut transmettre des données similaires aux données réceptionnées par l'interface d'entrée 106. Par exemple, l'interface de sortie peut émettre une demande de validation, un message d'information, un état dans lequel doit se mettre un système ADAS ... On entend par « émettre une demande », la capacité de déterminer un signal électronique représentatif de la demande et à émettre électroniquement ledit signal. On entend par « émettre un message d'information », la capacité à déterminer un signal électronique représentatif du message d'information et à émettre électroniquement ledit signal.

[Fig. 2] illustre schématiquement un procédé de mise en pause d'un premier système d'aide à la conduite d'un véhicule autonome, selon un exemple particulier de réalisation de la présente invention.
Un conducteur est présent dans ledit véhicule. Un occupant présent dans le véhicule peut être le conducteur. Le premier système d'aide à la conduite est également dit premier système ADAS, système global ou système ADAS global. Ledit système global comprenant un deuxième et au moins un troisième système d'aide à la conduite, dits respectivement deuxième système et troisième système. Ledit système global étant dans un état actif qu'après réception d'une demande d'activation par le conducteur. La demande d'activation rend ledit troisième système dans un état actif. Le deuxième système envoie une demande de validation lorsque le deuxième système reçoit la demande d'activation. Le deuxième système devient actif qu'après réception d'un acquittement, par le conducteur, de la demande de validation.
Le système global comprend donc un système à double demande d'activation, le deuxième système, et un système à simple demande d'activation, le troisième système.

Le premier système comporte donc des systèmes d'aide à la conduite, appelés sous-système aussi. Le premier système comporte au moins un système d'aide à la conduite à double demande d'activation, dit deuxième système, et au moins un système d'aide à la conduite de type simple demande d'activation, dit troisième système. Lorsque le premier système devient non actif, il est alors dans un état désactivé ou dans un état en pause. Le premier système devient non actif dès qu'un des sous-systèmes, comme le deuxième ou le troisième système, devient non actif. Lorsque le premier système est non actif, il entraine la mise en pause ou la désactivation de tous ses sous-systèmes.

Par exemple, le premier système est appelé « Drive », « Drive+ », « Drive assist » ..., permettant un pilotage de la vitesse du véhicule et de pilotage de la position du véhicule par rapport à la chaussée. Ledit deuxième système est un système de changement de voie, comme un SALC. Ledit troisième système est un système de réduction de la vitesse du véhicule dans les courbes, comme un CSA. Le premier système comprend également un quatrième système comme un ISA, un ASR, un ESP, ... Dans un autre exemple, le premier système est une aide à la conduite ou manœuvre permettant de stationner son véhicule. Le deuxième système est une aide au stationnement de « entrée en créneau », « entrée en bataille », « sortie de créneau », ... Le troisième système est un système de stop & go, d'activation des caméras, une alerte de trafic arrière ...

L'étape 201, Act, est une étape d'activation dudit système global, dudit deuxième et dudit troisième système, et initialisation d'une variable, dite variable d'état, pour indiquer que ledit deuxième système est au moins actif. Les trois systèmes sont présents dans le véhicule. Au démarrage du véhicule, ces trois systèmes peuvent être dans un état en pause. Les systèmes sont en attente de réception d'un signal demandant de s'activer. Le conducteur, à l'aide d'une IHM, va demander d'activer le système global. Par exemple, le conducteur va appuyer sur un bouton ce qui générer un signal de demande d'activation du système global. Le signal va être reçue par une interface d'entrée 106. Le signal va être interprété par un dispositif mettant en œuvre le premier système, le système global. Le système global va émettre alors un signal représentatif d'une demande d'activation au deuxième système et au troisième système. Le signal de demande d'activation du système global peut aussi être automatiquement transmis aux sous-systèmes, un sous-système comprenant que c'est aussi une demande d'activation le concernant. A réception de ce signal, le troisième système passe à l'état actif. Le troisième système est prêt à être déclenché, donc à apporter effectivement son aide à la conduite ou à la manœuvre. Le troisième système va surveiller ses conditions de fonctionnement pour pouvoir agir.
Le deuxième système va recevoir également le signal (demande d'activation). Le deuxième système étant un système à double validation, le deuxième système va émettre un signal de demande de validation. Une IHM va recevoir ce signal et émettre une information, par exemple un message lexical affiché dans une fenêtre contextuelle et/ou l'affichage d'une icône et/ou l'émission d'un son, au conducteur afin qu'il puisse acquitter la demande de validation. Pour acquitter la demande de validation, le conducteur ou un occupant du véhicule va à nouveau interagir avec l'IHM comme appuyer sur un bouton, sur une case d'un écran tactile, émettre un son ou une phrase, ... Un nouveau signal, signal d'acquittement de la demande de validation, est alors reçu par une interface d'entrée 106. Le deuxième système passe à l'état actif.

La variable qui indique un statut de l'état du deuxième système est initialisée lorsque ledit deuxième système devient actif. La variable d'état indique que ledit deuxième système est au moins actif, ledit deuxième système est dans un état actif ou dans un état déclenché.

L'étape 202, Det12, est une étape de détermination d'une première et d'une deuxième conditions de fonctionnement par ledit deuxième système, si ladite première et ladite deuxième conditions de fonctionnement sont vérifiées, ledit deuxième système est déclenché.

En arrivant dans cette étape, le deuxième système est au moins dans un état actif, la variable d'état indique que le deuxième système est au moins actif. Dans cette étape, l'état du deuxième système passe à un état déclenché si les conditions de fonctionnement sont vérifiées. La variable d'état ne change pas, elle indique que le deuxième système est dans un état au moins actif.

L'étape 203, Det13, est une étape de détermination de ladite première et d'une troisième conditions de fonctionnement par ledit troisième système, si ladite première et ladite troisième conditions de fonctionnement sont vérifiées, déclenchement dudit troisième système. Dans cette étape, l'état du troisième système passe dans un état déclenché. La variable d'état ne change pas.

Les étape 202 et 203 peuvent être exécutées par le dispositif 101 en parallèle, ou l'un à la suite de l'autre.

Pour chaque système ADAS, il existe de nombreuses conditions de fonctionnement. Il est possible de rassembler plusieurs conditions de fonctionnement de plusieurs systèmes ADAS du système global pour déterminer ladite première condition de fonctionnement. Avantageusement, ladite première condition de fonctionnement comprend une partie de plusieurs conditions de fonctionnement, la deuxième condition de fonctionnement comprend une autre partie de plusieurs conditions de fonctionnement, et la troisième condition de fonctionnement comprend une autre partie de condition de fonctionnement. Ainsi, ladite première condition de fonctionnement peut comprendre des conditions de fonctionnement du système global, du deuxième système et du troisième système. Avantageusement, la deuxième condition de fonctionnement ne comprend que des conditions de fonctionnement du deuxième système. Avantageusement, la troisième condition de fonctionnement ne comprend que des conditions de fonctionnement du troisième système. Avantageusement, la première condition de fonctionnement comprend des conditions de fonctionnement communes entre les sous-systèmes du système global et le système global.

Certaines conditions sont plus strictes que d'autres. Une condition stricte d'un système ADAS est par exemple une condition qui lorsque la condition n'est pas vérifiée, le système ADAS doit passer au statut en pause. Une condition non stricte est par exemple une condition qui lorsque la condition n'est pas vérifiée, le système ADAS passe au statut actif ou lorsque le système ADAS est déjà au statut actif, ce système ADAS n'est pas déclenché. Avantageusement, ladite première condition de fonctionnement comprend au moins toutes les conditions de fonctionnement strictes du deuxième système. Par exemple, une condition de fonctionnement stricte est le roulage sur une autoroute, une vitesse du véhicule supérieure à 30 km/h, une vitesse du véhicule inférieure à 180 km/h, une absence de détection d'une anomalie sur un capteur ou actionneur nécessaire au deuxième système, ... Par exemple, ladite première condition de fonctionnement est basée sur au moins une caractéristique d'une chaussée sur laquelle ledit véhicule circule, la caractéristique pouvant être une autoroute ou voie rapide. Cette condition de fonctionnement est commune entre un SALC, deuxième système, et un CSA et/ou un ISA, troisième système. Par exemple, une condition de fonctionnement non stricte est une vitesse du véhicule supérieure à 70 km/h, une absence de déclenchement ou de demande de déclenchement, ... Avantageusement, la deuxième condition de fonctionnement est basée sur une vitesse dudit véhicule supérieure à une première valeur prédéterminée, la première valeur prédéterminée étant 70 km/h, d'autres valeurs étant possibles. Une autre deuxième condition de fonctionnement est qu'une caractéristique de la chaussée est de type multivoies. Avantageusement, la troisième condition de fonctionnement est basée sur une vitesse dudit véhicule supérieure à une deuxième valeur prédéterminée, deuxième valeur prédéterminée étant différente de la première valeur prédéterminée, la deuxième valeur prédéterminée étant 50 km/h, d'autres valeurs étant possibles.

L'étape 204, Cond1, est une étape de test dans laquelle si ladite première condition de fonctionnement n'est pas vérifiée, ledit deuxième système et ledit troisième système passent dans un état en pause et ladite variable indique un état non actif dudit deuxième système. Par exemple, dans cette étape, une condition de fonctionnement commune au deuxième et troisième système n'est pas vérifiée. Cette condition commune peut être une condition stricte. Il peut être nécessaire, d'un point de vue réglementairement, avant de pouvoir activer le deuxième système, que le conducteur demande d'activer le système, puis acquitte une demande de validation.

L'étape 205, Cond2, est une étape de test dans laquelle si la deuxième condition de fonctionnement n'est pas vérifiée (205), ledit deuxième système reste dans son état précédemment déterminé. Dans cette étape, le système global reste dans un état au moins actif. Le troisième système reste alors dans son état qui peut être actif ou déclenchée. Dès que la deuxième condition de fonctionnement est vérifiée à nouveau, le deuxième système peut être déclenché sans que le conducteur ait besoin d'acquitter une demande de validation. Cette étape permet de limiter le nombre de demandes d'activation du système global et le nombre d'acquittements du deuxième système.

Les étapes 204 et 205 peuvent être exécutées par le dispositif 101 en parallèle, ou l'un à la suite de l'autre.

L'étape 206, Stp, est une étape de test dans laquelle si la variable d'état indique un état non actif, ledit système global passe également dans un état en pause. La variable d'état indique un état non actif, donc état en pause ou état désactivé, du deuxième système tant que le deuxième système n'est pas passé dans un état actif ou dans un état déclenché. Le deuxième système passe dans un état actif à la suite de l'étape 201. La variable d'état indique alors que le deuxième système est au moins actif.

Le deuxième système passe dans un état déclenché si le deuxième système est déjà dans un état actif et si toutes les conditions de fonctionnement du deuxième système sont vérifiées.

A la suite du passage dans l'étape 202, la variable d'état peut indiquer que le deuxième système n'est plus dans un état au moins actif. SI la première condition de fonctionnement n'est pas vérifiée, le système global passe dans un état non actif, et, il en est alors de même pour le troisième système. Également, si le système global passe dans un état non actif, la variable d'état indique un état non actif. Le système global peut passer dans un état non actif sur des conditions de fonctionnement différentes des conditions de fonctionnement du deuxième système.

L'étape 206 peut être exécutée en parallèle des étapes 202, 203, 204, et 205. L'étape peut également être exécutée à la suite d'une des étapes 202, 203, 204 ou 205.

Avantageusement, ledit véhicule comprend un dispositif apte à informer un occupant dudit véhicule, et dans lequel
- Si ladite première et ladite deuxième conditions de fonctionnement sont vérifiées, ledit deuxième système détermine et émet un premier message d'information ;
- Si ladite deuxième condition de déclenchement n'est pas vérifiée, ledit deuxième système détermine et émet un deuxième message d'information ;
- Si ladite première condition de déclenchement n'est pas vérifiée, ledit deuxième système détermine et émet un troisième message d'information ;
ledit dispositif réceptionne lesdits premier, deuxième et troisième messages et informe ledit occupant.

Ainsi le conducteur est informé et peut comprendre dans quel état se trouve le système global, le deuxième système et le troisième système. L'affichage est cohérent. Il peut mieux comprendre pourquoi le système global, le deuxième système ou le troisième n'est plus actif. Le conducteur n'acquitte la demande de validation qu'à bon escient.

La présente invention ne se limite pas aux formes de réalisations décrites ci-avant à titre d'exemples : elle s'étend à d'autres variantes.

Ainsi, on a décrit ci-avant un exemple de réalisation dans lequel le système global comprend un deuxième système et un troisième système. Le système global peut comprendre un quatrième système (ou plus). Dans ce cas la première condition de fonctionnement peut comprendre les conditions strictes du premier système, et des conditions communes entre le deuxième, troisième et quatrième système (ou plus).

## Revendications

1. Procédé de mise en pause d'un premier système d'aide à la conduite d'un véhicule autonome en présence d'un conducteur, dit système global, ledit système global comprenant un deuxième et au moins un troisième système d'aide à la conduite, dits respectivement deuxième système et troisième système, ledit système global étant dans un état actif qu'après réception d'une demande d'activation par le conducteur et que si les deuxième système et troisième système sont actifs, la demande d'activation rendant ledit troisième système dans un état actif, le deuxième système envoyant une demande de validation lorsque le deuxième système reçoit la demande d'activation, le deuxième système devenant actif qu'après réception d'un acquittement, par le conducteur, de la demande de validation, le procédé comportant les étapes de :
- Activation (201) dudit système global, dudit deuxième et dudit troisième système et initialisation d'une variable, dite variable d'état, pour indiquer que ledit deuxième système est au moins actif ;
- Détermination (202) d'une première et d'une deuxième condition de fonctionnement par ledit deuxième système, si ladite première et ladite deuxième conditions de fonctionnement sont vérifiées, déclenchement dudit deuxième système ;
- Si ladite première condition de fonctionnement n'est pas vérifiée (204), ledit deuxième système et ledit troisième système passent dans un état en pause et ladite variable indique un état non actif dudit deuxième système ;
- Si ladite deuxième condition de fonctionnement n'est pas vérifiée (205), ledit deuxième système reste dans son état précédemment déterminé ;
- Si la variable d'état indique un état non actif (206), ledit système global passe dans un état en pause.
ledit procédé comporte en outre une étape de détermination (203) de ladite première et d'une troisième condition de fonctionnement par ledit troisième système, si ladite première et ladite troisième conditions de fonctionnement sont vérifiées, déclenchement dudit troisième système ;
procédé dans lequel ladite deuxième condition de fonctionnement est basée sur une vitesse dudit véhicule supérieure à une première valeur prédéterminée, et ladite troisième condition de fonctionnement est basée sur une vitesse dudit véhicule supérieure à une deuxième valeur prédéterminée, ladite deuxième valeur prédéterminée étant différente de la dite première valeur prédéterminée

2. Procédé selon la revendication 1, dans lequel ledit véhicule comprend un dispositif apte à informer un occupant dudit véhicule, et dans lequel
- Si ladite première et ladite deuxième conditions de fonctionnement sont vérifiées, ledit deuxième système détermine et émet un premier message d'information ;
- Si ladite deuxième condition de déclenchement n'est pas vérifiée, ledit deuxième système détermine et émet un deuxième message d'information ;
- Si ladite première condition de déclenchement n'est pas vérifiée, ledit deuxième système détermine et émet un troisième message d'information ;
ledit dispositif réceptionne lesdits premier, deuxième et troisième messages et informe ledit occupant.

3. Procédé selon l'une des revendications précédentes, dans lequel ledit deuxième système est un système de changement de voie, et ledit troisième système est un système de réduction de la vitesse du véhicule dans les courbes, ladite première condition de fonctionnement est basée sur au moins une caractéristique d'une chaussée sur laquelle ledit véhicule circule.

4. Dispositif (101) comprenant une mémoire (102) associée à au moins un processeur (103) configuré pour mettre en œuvre le procédé selon l'une des revendications précédentes.

5. Véhicule comportant le dispositif selon la revendication précédente.

6. Programme d'ordinateur comprenant des instructions qui, lorsque le programme est exécuté par le dispositif (101), conduisent celui-ci à mettre en œuvre le procédé selon l'une des revendication 1 à 3.

## Patentansprüche

1. Verfahren zum Anhalten eines ersten Fahrerassistenzsystems eines autonomen Fahrzeugs in Gegenwart eines Fahrers, des so genannten globalen Systems, wobei das genannte globale System ein zweites und mindestens ein drittes Fahrerassistenzsystem, das so genannte zweite System bzw. das dritte System, umfasst, wobei sich das genannte globale System in einem aktiven Zustand befindet, nachdem eine Aktivierungsanforderung durch den Fahrer empfangen wurde und wenn das zweite System und das dritte System aktiv sind, wobei die Aktivierungsanforderung das genannte dritte System in einen aktiven Zustand versetzt, wobei das zweite System eine Freigabeanforderung sendet, wenn das zweite System die Aktivierungsanforderung empfängt, wobei das zweite System erst nach Erhalt einer Bestätigung durch den Fahrer der Validierungsanforderung, wobei das Verfahren folgende Schritte umfasst:
- Aktivierung (201) des Gesamtsystems, des zweiten und des dritten Systems und Initialisierung einer Variablen, der so genannten Zustandsvariablen, um anzuzeigen, dass das zweite System mindestens aktiv ist;
- Bestimmung (202) einer ersten und einer zweiten Betriebsbedingung durch das zweite System, wenn die erste und die zweite Betriebsbedingung erfüllt sind, Auslösung des zweiten Systems;
- Wenn die erste Betriebsbedingung nicht überprüft wird (204), schalten das zweite System und das dritte System in einen pausierten Zustand um, und die Variable zeigt einen nicht aktiven Zustand des zweiten Systems an;
- Wird die zweite Betriebsbedingung nicht überprüft (205), verbleibt das zweite System in seinem zuvor bestimmten Zustand;
- Wenn die Zustandsvariable einen nicht aktiven Zustand (206) anzeigt, wechselt das Gesamtsystem in einen angehaltenen Zustand;
das Verfahren umfasst ferner einen Schritt des Bestimmens (203) der ersten und dritten Betriebsbedingung durch das dritte System, wenn die erste und die dritte Betriebsbedingung erfüllt sind, des Auslösens des dritten Systems;
Verfahren, bei dem die zweite Betriebsbedingung auf einer Fahrzeuggeschwindigkeit basiert, die größer als ein erster vorbestimmter Wert ist, und die dritte Betriebsbedingung auf einer Fahrzeuggeschwindigkeit basiert, die größer als ein zweiter vorbestimmter Wert ist, wobei der zweite vorbestimmte Wert von dem ersten vorbestimmten Wert verschieden ist.

2. Verfahren nach Anspruch 1, wobei das Fahrzeug eine Vorrichtung umfasst, die geeignet ist, einen Insassen des Fahrzeugs zu informieren, und wobei
- Wenn die erste und die zweite Betriebsbedingung erfüllt sind, bestimmt und sendet das zweite System eine erste Informationsmeldung;
- Wenn die zweite Auslösebedingung nicht erfüllt ist, bestimmt und sendet das zweite System eine zweite Informationsmeldung;
- Wenn die erste Auslösebedingung nicht erfüllt ist, bestimmt und sendet das zweite System eine dritte Informationsmeldung;
Die Vorrichtung empfängt die erste, zweite und dritte Nachricht und informiert den Insassen.

3. Verfahren nach einem der vorhergehenden Ansprüche, bei dem das zweite System ein Spurwechselsystem ist und das dritte System ein System zur Verringerung der Geschwindigkeit des Fahrzeugs in Kurven ist, wobei die erste Betriebsbedingung auf mindestens einem Merkmal einer Fahrbahn basiert, auf der das Fahrzeug fährt.

4. Vorrichtung (101) mit einem Speicher (102), der mindestens einem Prozessor (103) zugeordnet ist, der so konfiguriert ist, dass er das Verfahren nach einem der vorhergehenden Ansprüche ausführt.

5. Fahrzeug mit der Vorrichtung nach dem vorhergehenden Anspruch.

6. Computerprogramm, das Befehle umfasst, die, wenn das Programm von der Vorrichtung (101) ausgeführt wird, diese veranlassen, das Verfahren nach einem der Ansprüche 1 bis 3 auszuführen.

## Claims

1. Method for pausing a first autonomous driving assistance system in the presence of a driver, called a global system, said global system comprising a second and at least a third driving assistance system, called respectively second system and third system, said global system being in an active status only after receipt of an activation demand by the driver and if the second system and third system are active, the activation demand rendering said third system in an status active, the second system sending a validation demand when the second system receives the demand activation, the second system becoming active only after receipt of an acknowledgement, by the driver, of the validation demand, the method comprising the steps of:
- Activation (201) of said global system, said second system and said third system and initialization of a variable, called status variable, to indicate that said second system is at least active;
- Determination (202) of a first and a second operating condition by said second system, if said first and said second operating conditions are verified, triggering of said second system;
- If said first operating condition is not satisfied (204), said second system and said third system pass into a paused status and said variable indicates a non-active status of said second system;
- If said second operating condition is not satisfied (205), said second system remains in its previously determined status;
- If the status variable indicates a non-active status (206), said global system switches to a paused status;
said method further comprises a step of determining (203) said first and a third operating condition by said third system, if said first and said third operating conditions are verified, triggering said third system;
method in which said second operating condition is based on a speed of said vehicle greater than a first predetermined value, and said third operating condition is based on a speed of said vehicle greater than a second predetermined value, said second predetermined value being different from said first predetermined value.

2. Method according to claim 1, wherein said vehicle comprises a device capable of informing an occupant of said vehicle, and wherein
- If said first and said second operating conditions are satisfied, said second system determines and transmits a first information message;
- If said second trigger condition is not satisfied, said second system determines and sends a second information message;
- If said first trigger condition is not satisfied, said second system determines and sends a third information message;
said device receives said first, second and third messages and informs said occupant.

3. Method as claimed in claim 1, wherein said second system is a lane changing system, and said third system is a curved speed reduction system, said first operating condition is based on at least one feature of a roadway on which said previous vehicle is travelling.

4. Device (101) comprising a memory (102) associated with at least one processor (103) configured to implement the method according to one of the previous claims.

5. Vehicle comprising the device according to the previous claim.

6. Computer plan comprising instructions which, when the plan is executed by the device (101), lead the latter to implement the method according to one of claims 1 to 3.
